# EUROPÄISCHE PATENTSCHRIFT

(11) **EP 0 517 003 B1**
(45) Veröffentlichungstag und Bekanntmachung des Hinweises auf die Patenterteilung: **05.08.1998**
(21) Anmeldenummer: 92107934.9
(22) Anmeldetag: 12.05.1992
(51) Int. Cl.: B23Q 37/00, B23Q 1/01, B25H 1/00

(54) **Flexible Bearbeitungszelle**
Flexible manufacturing cell
Cellule de fabrication flexible

(30) Priorität: 28.05.1991 DE 4117439
(43) Veröffentlichungstag der Anmeldung: 09.12.1992
(73) Patentinhaber: ROBERT BOSCH GMBH, 70442 Stuttgart (DE)
(72) Erfinder: Drexel, Peter, Dipl.-Ing., W-7049 Steinenbronn (DE); Gosdowski, Gerhard, Ing., W-7120 Bietigheim (DE); Schult, Christian, Dipl.-Ing., W-7050 Waiblingen (DE)

(56) Entgegenhaltungen:
- WO-A-89/11375
- DE-A- 2 918 662
- DE-A- 3 346 664
- DE-A- 3 514 343
- DE-U- 8 529 284
- GB-A- 1 109 138
- GB-A- 2 197 240
- GB-A- 2 214 454
- NL-A- 7 705 972

## Beschreibung

### Stand der Technik

Die Erfindung geht aus von einer flexiblen Bearbeitungszelle nach der Gattung des Hauptanspruchs. Eine Bearbeitungszelle gemäß dem Oberbegriff des Anspruchs 1 geht aus der GB-A-1 109 138 hervor. Die Bearbeitungseinheit dieser Bearbeitungszelle wird auf einen Träger mit einem feststehenden Raster aufgesetzt. Ein Austausch der Bearbeitungseinheit durch eine, andere Befestigungsstellen aufweisende Bearbeitungseinheit ist hierbei weder vorgesehen noch notwendig.

Weiterhin bekannte flexible Bearbeitungszellen verfügen über einen Gestellaufbau, welcher den Rahmen für eine mindestens eine Bearbeitungseinheit umgebende Umhüllung bildet. Der Rahmen ist beispielsweise aus Profilelementen ausgeführt. Der andererseits hinlänglich bekannte modulare Aufbau von Montagelinien beschränkt sich auf die Modulbauweise des Transportsystems. Die Funktionserweiterung der Montagemodule erfordert deshalb an die verschiedenen Anwendungsfälle angepaßte Funktionseinheiten für Handhabung und/oder Materialbereitstellung.

Der Erfindung liegt die Aufgabe zugrunde, eine Bearbeitungszelle anzugeben, die mit verschiedenen Funktionseinheiten ausrüstbar ist und somit eine hohe Flexibilität hinsichtlich der zu lösenden Fertigungs- bzw. Montagearbeiten ermöglicht. Ein modularer Aufbau soll gewährleistet sein.

### Vorteile der Erfindung

Die erfindungsgemäße flexible Bearbeitungszelle mit den Merkmalen des Hauptanspruchs hat demgegenüber den Vorteil, daß neben den Grundfunktionen der Transporteinheit auch die Funktionsintegration von Handhabung und Materialbereitstellung in den modularen Aufbau einbezogen ist. Dem Anwender von flexiblen Transferstraßen steht damit eine kostengünstige Bearbeitungszelle mit hoher Funktionsintegration zur Verfügung, die eine optimale Ausbaufähigkeit garantiert. Somit ist es möglich, die Basiseinheit für verschiedene Anwendungsfälle modular zu erweitern. Der Träger der Basiseinheit ist mit verschiedenen Funktionseinheiten ausrüstbar, indem das Befestigungsraster der Tischplatte eine variierbare Anschraubfläche für die Funktionseinheiten bietet.

Durch die in den Unteransprüchen aufgeführten Maßnahmen sind vorteilhafte Weiterbildungen des Hauptanspruchs möglich.

Die Ausführung der Tischplatte aus Mineralguß bietet den Vorteil, daß neben den mechanischen Eigenschaften, wie hohe Festigkeit und Dämpfung, der Mineralguß auch gegen aggressive Medien, wie Öl, Fette, Benzin und ähnliches resistent ist. Die einfache Einbringung von Durchbrüchen in den Mineralguß läßt darüber hinaus die Möglichkeit zu, pneumatische und elektrische Installationen hindurchzuführen sowie beispielsweise Hub- und Positioniereinheiten, Unterwerkzeuge, Presseinheiten und ähnliche Funktionsmittel anzulenken.

Durch den Einsatz von Strangpreßprofilen sind durch die darin vorhandenen T-Nuten Befestigungsmöglichkeiten für vertikal angesetzte Funktionserweiterungen gegeben.

### Zeichnung

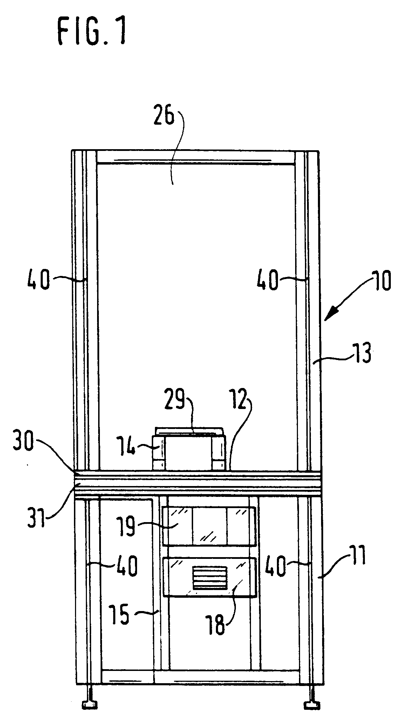

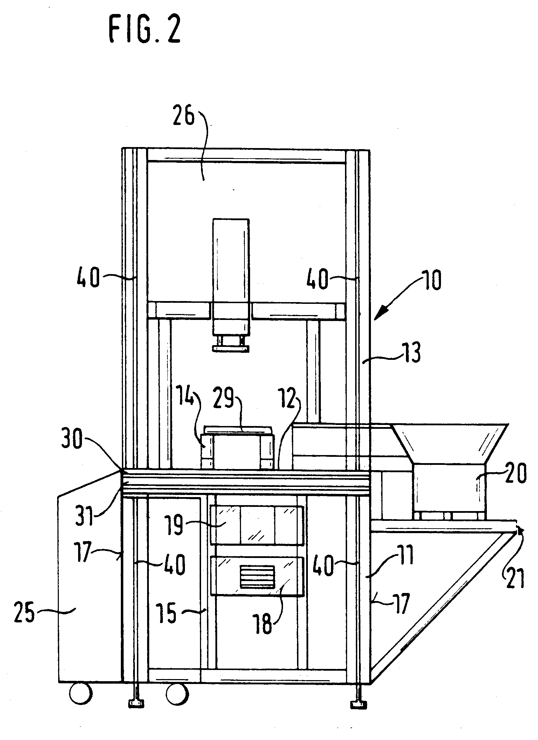

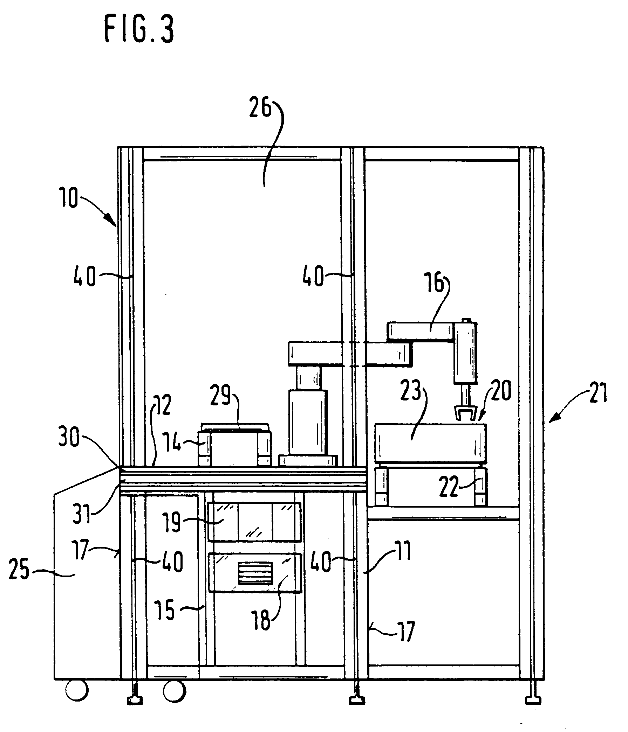

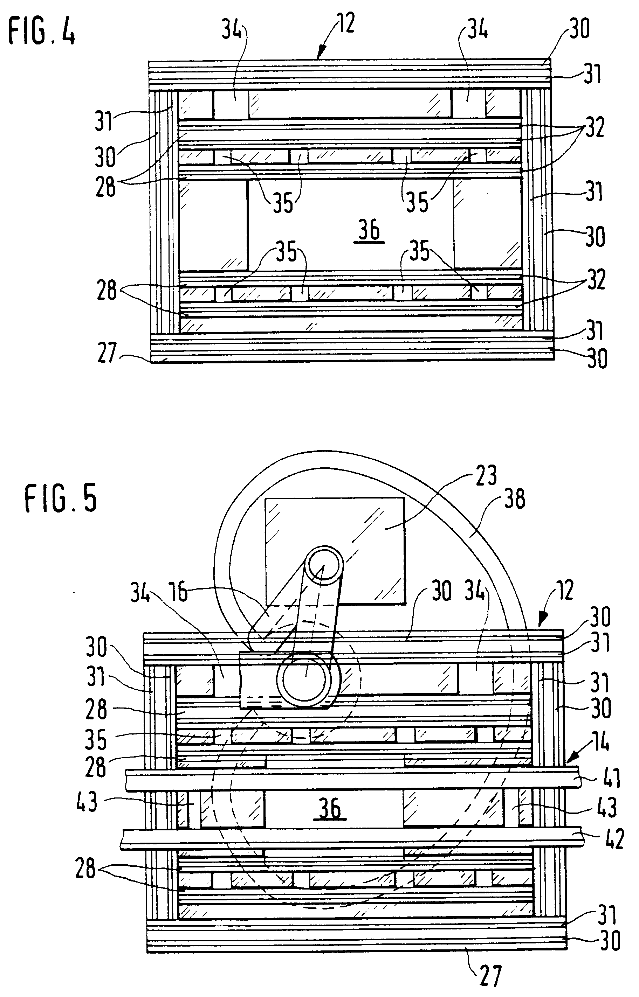

Zwei Ausführungsbeispiele der Erfindung sind in der Zeichnung dargestellt und in der nachfolgenden Beschreibung näher erläutert. Es zeigen Figur 1 eine Basiseinheit der flexiblen Fertigungszelle, Figur 2 eine Basiseinheit mit Funktionssysteme für Handhabung, Materialbereitstellung und Steuerung, Figur 3 eine mit einem Materialbereitstellungsmodul erweiterte Basiseinheit, Figur 4 eine Draufsicht auf eine Tischplatte der flexiblen Bearbeitungszelle und Figur 5 eine Tischplatte gemäß Figur 4 mit einem Schwenkarmroboter als Handhabungseinheit.

### Beschreibung der Ausführungsbeispiele

Die in Figur 1 dargestellte Basiseinheit 10 der flexiblen Fertigungszelle besteht aus einem Untergestell 11, einer Tischplatte 12, einem Gestell 13 für eine Umhüllung 26, einer Transferstrecke 14 mit einem Werkstückträger 29 und einem Installationsrahmen 15. Der Installationsrahmen 15 ist unterhalb der Tischplatte 12 am Untergestell 11 befestigt und enthält beispielsweise einen elektrischen Steckverteiler 18 und Pneumatikanschlüsse 19. Das Untergestell 11 und das Gestell 13 sind beispielsweise aus Aluminium-Strangpreßprofil ausgeführt. Das Strangpreßprofil ist vorzugsweise quadratisch ausgebildet und besitzt an allen vier Seitenflächen mindestens eine T-Nut 40.

Figur 2 zeigt ein erstes Ausführungsbeispiel, bei dem die Basiseinheit 10 gemäß Figur 1 erweitert ist durch die Funktionseinheiten Portalroboter 16, Materialbereitstellungseinheit 20 und Steuereinheit 25. Der Portalroboter 16 ist mittels seiner beiden Ständer auf die Tischplatte 12 montiert. Der Erweiterungsmodul 21 und die Steuereinheit 25 sind in der Tiefe an die Basiseinheit 10 seitlich angesetzt. Hierbei dienen die Profilelemente des Untergestells 11 als Anbauflächen 17 für die Einheiten 20 und 25. Als Befestigungselemente sind beispielsweise nicht dargestellte Hammermuttern oder Hammerschrauben verwendbar, die in die T-Nuten 40 der Strangpreßprofile eingesetzt werden.

Ein zweites Ausführungsbeispiel geht aus Figur 3 hervor. Hierbei ist die Basiseinheit 10 in der Tiefe an einer Seite mit einem Erweiterungsmodul 21 ausgerüstet. Der Modul 21 enthält ein weiteres Transfersystem 22 für die Materialbereitstellung mit einem dargestellten Magazinbehälter 23. Der auf der Tischplatte 12 der Basiseinheit 10 befestigte Schwenkarmroboter 16 ist mit seinem Aktionsradius so ausgelegt, daß er die im Magazinbehälter 23 kommissionierten Teile entnehmen und zum Werkstückträger 29 bewegen kann. Der Erweiterungsmodul 21 ist ebenfalls aus einem Rahmengestell ausgebildet, welches an den Anbauflächen 17 der Profile des Untergestells 11 und/oder des Gestells 13 der Umhüllung befestigt ist. Aus Sicherheitsgründen ist die Erweiterungseinheit 21 ebenfalls so ausgebildet, daß sie das Transportsystem für die Materialbereitstellung 22 und den Schwenkbereich des Schwenkarmroboters 16 als Umhüllung umgibt.

Die in Figur 4 dargestellte Tischplatte 12 enthält einen Rahmen 27 aus Profilelementen. Die Profilelemente besitzen vorzugsweise an jeder Seitenfläche zwei T-Nuten 30, 31. Die äußerer T-Nut 30 dient beispielsweise zum Befestigen des Gestells 13 der Umhüllung 26. In Längsrichtung der Bearbeitungszelle sind ebenfalls aus Strangpreßprofil ausgeführte Streben 28 eingesetzt, die, wie die Profilelemente des Rahmens 27, mit T-Nuten 32 ausgerüstet sind. Zur Stabilisierung ist die Tischplatte 12 innerhalb des Rahmens 27 bis auf einige Durchbrüche 34, 35 und 36 mit Mineralguß ausgefüllt. Die T-Nuten 30 bis 32 der Profilelemente des Rahmens 27 und der Streben 28 sind an der Ober- und Unterseite der Tischplatte 12 zugänglich.

Die T-Nuten 30, 31 und 32 der Profilelemente des Rahmens 27 und der Streben 28 bilden das Befestigungsraster der Tischplatte 12. Durch den bündigen Abschluß der Profilelemente an der Ober- und Unterseite der Tischplatte 12 ist es möglich, beide Flächen als Anbauflächen zu nutzen. Figur 5 zeigt beispielsweise den in zwei T-Nuten 31, 32 der Oberseite der Tischplatte 12 befestigten Schwenkarmroboter 16, der mit seinem Arbeitsbereich 38 etwa die Hälfte der Tischplatte 12 abdeckt. Der außerhalb der Tischplatte 12 liegende Arbeitsbereich 38 überstreicht einen Magazinbehälter 23. Ein derartiger Aufbau ergibt sich beispielsweise aus dem Aufbau der Bearbeitungszelle gemäß Figur 3, wo ebenfalls der Schwenkarmroboter 16 mit seinem Arbeitsbereich 38 etwa zur Hälfte aus der Basiseinheit 10 hinausreicht und Zugriff zu dem neben der Basiseinheit 10 angeordneten Erweiterungsmodul 21 besitzt.

Ferner ist auf der Tischplatte 12 die Transferstrecke 14 angeordnet. Die beiden den Doppelgurt führenden Schienen 41, 42 sind mit nicht näher dargestellten Befestigungswinkeln in den T-Nuten 30 und/oder 31 der beiden in der Tiefe der Bearbeitungszelle verlaufenden Profilelementen des Rahmens 27 aufgeschraubt. Der Abstand der beiden Schienen 41, 42 wird mittels Distanzstücke 43 festgelegt. Durch die Befestigung in den T-Nuten 30 und/oder 31 ist die Transferstrecke 14 in der Tiefe der Bearbeitungszelle verschiebbar auf der Tischplatte 12 aufsetzbar.

Der etwa zentral in der Tischplatte 12 eingebrachte Durchbruch 36 dient zur Integration von Systemeinbauten, wie Hub- und Positioniereinheiten für die Transferstrecke 14. Dabei bietet sich an, die in der Zeichnung nicht dargestellten Systemeinbauten in den T-Nuten der Unterseite der Tischplatte 12 zu befestigen.

Zum Aufbau einer Transferstraße werden einzelne Bearbeitungszellen in Längsrichtung hintereinander gekoppelt. Dabei kann die Transferstrecke 14 jeder Basiseinheit 10 über einen eigenen Antrieb verfügen. Es ist aber auch sinnvoll, die Transferstrecken der in Längsrichtung hintereinander gereihten Basiseinheiten 10 mit einem einzigen Antrieb zu versehen. Die Art und Weise des Antriebs und der Kopplung von Transfermodulen zu einer Transferstraße ist im Stand der Technik bereits beschrieben. Durch die Variationsmöglichkeit des Befestigungsrasters der Tischplatte 12 ist die Basiseinheit 10 mit unterschiedlichen Transfersytemen ausrüstbar.

Das auf der Tischplatte 12 aufgesetzte Gestell 13 der Umhüllung der Bearbeitungszelle ist an den Seiten mit einem durchsichtigen Kunststoff verkleidet. Die Umhüllung bildet die Sicherheitseinrichtung für die in der Bearbeitungszelle installierte Handhabungseinheit 16. Der Zugang in die Bearbeitungszelle erfolgt mittels einer an der Frontseite angebrachten und mit einer Zwangsverriegelung ausgeführten Schwenktür.

Die Kopplung der in Längsrichtung hintereinander gereihten Bearbeitungszellen, erfolgt beispielsweise mit in die seitlich zugänglichen T-Nuten 30, 31 des Rahmens 27 eingesetzten Profilverbinder.

## Patentansprüche

1. Flexible Bearbeitungszelle, insbesondere Montagezelle, für eine Transferlinie mit einem Gestellaufbau, welcher einen Rahmen für ein Untergestell (11) mit einem Träger (12) aufweist, sowie mit mindestens einer Transferstrecke (14) und mindestens einer Bearbeitungseinheit (16), wobei zumindest die Transferstrecke (14) auf dem Träger (12) befestigt ist, **dadurch gekennzeichnet**, daß der Träger (12) ein Befestigungsraster aufweist, welches von einem durch Profilelemente mit T-Nuten gebildeten Rahmen (27) und von in Längserstreckung der Montagezelle verlaufenden Streben (28) gebildet ist, und wobei die T-Nuten zumindest an der Ober- und Unterseite des Trägers (12) zugänglich sind, daß auf dem Untergestell (11) ein weiterer Gestellaufbau befestigt ist, der den Rahmen einer Umhüllung bildet, daß die Umhüllung zumindest teilweise die Bearbeitungseinheit umgibt und daß der Träger (12) die horizontale Abmessung der Bearbeitungszelle, angibt, wobei die Tiefe des Trägers für alle Anwendungsfälle festgelegt und die Längserstreckung den Anwendungsfällen angepaßt ist, so daß der mit der Bearbeitungseinheit und mit der Transferstrecke ausgerüstete Gestellaufbau eine Basiseinheit (10) für die Grundfunktionen der Bearbeitungszelle bildet.

2. Flexible Bearbeitungszelle nach Anspruch 1, dadurch gekennzeichnet, daß quer zur Längserstreckung der Basiseinheit (10) mindestens eine weitere Funktionseinheit (21) ankoppelbar ist.

3. Flexible Bearbeitungszelle nach Anspruch 2, dadurch gekennzeichnet, daß die weitere Funktionseinheit (21) eine Materialbereitstellungseinheit ist, die am Gestellaufbau der Basiseinheit (10) befestigt oder als separater Modul beigestellt ist.

4. Flexible Bearbeitungszelle nach Anspruch 1, dadurch gekennzeichnet, daß der Träger (12) eine mit dem Rahmen (27) begrenzte Tischplatte ist, daß der Rahmen (27) mit Mineralguß (37) ausgefüllt ist und daß der Mineralguß (37) über mindestens einen Durchbruch (34 bis 36) verfügt, der zur Durchführung von pneumatischen und/oder elektrischen Installationsleitungen und/oder zur Durchführung von Funktionselementen vorgesehen ist.

5. Flexible Bearbeitungszelle nach Anspruch 4, dadurch gekennzeichnet, daß die Tischplatte in der Tiefe mindestens die Hälfte der Reichweite der Bearbeitungseinheit einnimmt.

6. Flexible Bearbeitungszelle nach Anspruch 1, dadurch gekennzeichnet, daß im Untergestell (11) ein Installationsrahmen (15) eingesetzt ist, der die elektrischen und/oder pneumatischen Installationsanschlüsse (18, 19) aufnimmt.

7. Flexible Bearbeitungszelle nach Anspruch 6, dadurch gekennzeichnet, daß im Untergestell (11) eine Steuereinheit (25) einsetzbar ist.

8. Flexible Bearbeitungszelle nach Anspruch 7, dadurch gekennzeichnet, daß die Umhüllung aus einer mit dem Rahmen versehenen Füllung aus durchsichtigem Kunststoff gebildet ist und zumindest an der Frontseite eine mit einer Zwangsverriegelung ausgerüstete Tür aufweist.

## Claims

1. Flexible machining cell, in particular an assembly cell, for a transfer line having a framed construction, which has a frame for a subframe (11) with a support (12), and having at least one transfer section (14) and at least one machining unit (16), at least the transfer section (14) being fastened on the support (12), characterized in that the support (12) has a fastening grid that is formed from a frame (27) formed by profile elements with T grooves and from webs (28) running in the longitudinal extent of the assembly cell, and the T grooves being accessible at least on the upper and lower side of the support (12), in that there is fastened on the subframe (11) a further framed construction, which forms the frame of a covering, in that the covering at least partly encloses the machining unit, and in that the support (12) specifies the horizontal dimension of the machining cell, the depth of the support being defined for all applications and the longitudinal extent being adapted to the applications, with the result that the framed construction equipped with the machining unit and with the transfer section forms a base unit (10) for the basic functions of the machining cell.

2. Flexible machining cell according to Claim 1, characterized in that at least one further functional unit (21) can be coupled in transversely to the longitudinal extent of the base unit (10).

3. Flexible machining cell according to Claim 2, characterized in that the further functional unit (21) is a material provisioning unit, which is fastened to the framed construction of the base unit (10) or is placed beside it as a separate module.

4. Flexible machining cell according to Claim 1, characterized in that the support (12) is a table plate bounded by the frame (27), in that the frame (27) is filled with a mineral casting (37), and in that the mineral casting (37) has at least one aperture (34 to 36), which is provided for pneumatic and/or electrical installation lines to be led through and/or for functional elements to be led through.

5. Flexible machining cell according to Claim 4, characterized in that the depth of the table plate occupies at least half the range of the machining unit.

6. Flexible machining cell according to Claim 1, characterized in that there is incorporated in the subframe (11) an installation frame (15) which accommodates the electrical and/or pneumatic installation connections (18, 19).

7. Flexible machining cell according to Claim 6, characterized in that a control unit (25) can be incorporated in the subframe (11).

8. Flexible machining cell according to Claim 7, characterized in that the covering is formed from a filling of transparent plastic provided with the frame and, at least at the front side, has a door equipped with a positive locking means.

## Revendications

1. Cellule de fabrication flexible, en particulier cellule de montage, pour une ligne de transfert comprenant un châssis, qui présente un cadre pour un bâti de base (11) avec un support (12), ainsi qu'au moins un trajet de transfert (14) et au moins une unité de fabrication (16), le trajet de transfert (14) étant fixé sur le support (12),
caractérisé en ce que
- le support (12) présente une grille de fixation, qui est formée par un cadre (27) constitué par des éléments profilés avec des rainures en T et par des montants (28) s'étendant dans le sens longitudinal de la cellule de montage, et les rainures en T étant au moins accessibles sur la face supérieure et sur la face de base du support (12),
- sur le bâti de base (11), est fixé un autre châssis qui forme le cadre d'une enveloppe,
- l'enveloppe entoure au moins en partie l'unité de fabrication et
- le support (12) indique la dimension horizontale de la cellule de fabrication, la profondeur du support étant déterminée pour tous les cas d'applications et l'étendue longitudinale étant adaptée aux cas d'application, de telle sorte que le châssis, équipé de l'unité de fabrication et du trajet de transfert, forme une unité de base (10) pour les fonctions principales de la cellule de fabrication.

2. Cellule flexible de fabrication, selon la revendication 1,
caractérisée en ce qu'
on peut accoupler perpendiculairement à l'étendue longitudinale de l'unité de base (10) au moins une autre unité fonctionnelle (21).

3. Cellule flexible de fabrication, selon la revendication 2,
caractérisée en ce que
l'autre unité fonctionnelle (21) est une unité de préparation de la matière, qui est fixée sur le châssis de l'unité de base (10) ou est jointe sous la forme d'un module sépare.

4. Cellule flexible de fabrication, selon la revendication 1,
caractérisée en ce que
- le support (12) est un plateau de table délimité par le cadre (27),
- le cadre (27) est rempli d'une charge minérale (37) et
- la charge minérale (37) dispose d'au moins un ajour (34 à 36), qui est prévu pour servir au passage de conduites d'installations pneumatiques et/ou électriques et/ou au passage d'éléments fonctionnels.

5. Cellule flexible de fabrication, selon la revendication 4,
caractérisée en ce que
le plateau de table occupe en profondeur au moins la moitié de la portée de l'unité de fabrication.

6. Cellule flexible de fabrication, selon la revendication 1,
caractérisée en ce que
dans le bâti de base (11) est inséré un cadre d'installation (15), qui reçoit les raccordements d'installation (18, 19) électriques et/ou pneumatiques.

7. Cellule flexible de fabrication, selon la revendication 6,
caractérisée en ce que
dans le bâti de base (11) on peut insérer une unité de commande (25).

8. Cellule flexible de fabrication, selon la revendication 7,
caractérisée en ce que
l'enveloppe consiste en un remplissage, pourvu du cadre, en matière plastique transparente, et présente au moins sur la face frontale une porte équipée d'un verrouillage obligatoire.
